# EUROPÄISCHE PATENTANMELDUNG

(11) **EP 4 844 296 A1**
(43) Veröffentlichungstag der Anmeldung: **25.11.2026**
(21) Anmeldenummer: 25177549.0
(22) Anmeldetag: 20.05.2025
(51) Int. Cl.: F24F 11/47, F24F 11/523

(54) **RAUMTEMPERATURREGLER UND ANORDNUNG MIT EINEM SOLCHEN UND EINER SCHALTBAREN STECKDOSE**

(71) Anmelder: Albrecht Jung GmbH & Co. KG, 58579 Schalksmühle (DE)
(72) Erfinder: Rauch, Daniel, 42115 Wuppertal (DE); Kniep, Sascha, 58762 Altena (DE); Schulte, Manuel, 42855 Remscheid (DE)
(74) Vertreter: Fobbe, Tobias

(57) **Zusammenfassung**

Vorgestellt wird ein Raumtemperaturregler RT der Gebäudeinstallationstechnik umfassend Anschlussmittel an eine Energieversorgung sowie Anschlussmittel an eine Heizungsanlage eines Gebäudes, wobei der Raumtemperaturregler ein Bedienelement B umfasst.

Besonders dabei ist, dass der Raumtemperaturregler RT an ein Smart-Meter oder ein Energiemanagementsystem zur Bereitstellung von Informationen bezüglich regenerativ erzeugter Energie angeschlossen ist und dass der Raumtemperaturregler RT eine visuelle Anzeige A umfasst, die die Informationen bezüglich regenerativ erzeugter Energie oder Informationen bezüglich einer aktuellen Stromquelle, beispielsweise regenerativ erzeugter Energie oder Netzstrombezug inklusive des Netzstrompreises, visuell wiedergibt.

## Beschreibung

Die Erfindung betrifft einen Raumtemperaturregler der Gebäudeinstallationstechnik umfassend Anschlussmittel an eine Energieversorgung sowie Anschlussmittel an eine Heizungsanlage eines Gebäudes, wobei der Raumtemperaturregler ein Bedienelement umfasst.

Ferner betrifft die Erfindung eine Anordnung umfassend eine schaltbare Steckdose und einen Raumtemperaturregler.

Die umweltbewusste Nutzung von elektrischen Verbrauchern angeschlossen an Steckdosen oder auch die umweltbewusste Steuerung von Heizungsanlagen gewinnt zunehmen an Bedeutung, insbesondere wenn ein Gebäude regenerativ Energie erzeugt.

Sogenannte Funktionsmodule zur Installation in der Installationsdose hinter elektrische/elektronische Installationsgeräte der Gebäudeinstallationstechnik (siehe DE 10 2021 132 395 A1 oder DE 10 2024 126 894 B3) erlauben es, bestimmte Funktionalitäten, beispielsweise das Verknüpfen mit einem Smart-Home-Netzwerk zur Erfassung regenerativ erzeugter Energie und zur entsprechenden Steuerung der Verbraucher mit schaltbaren Steckdosen, hinzuzugewinnen. Problematisch dabei ist, dass die Erfassung für den Anwender, wie viel regenerativ Energie im Gebäude vorhanden ist, regelmäßig ein Endgerät erfordert, was den Ableseaufwand erhöht beziehungsweise das Ablesen unkomfortabel macht.

Ausgehend von diesem diskutierten Stand der Technik liegt der Erfindung die Aufgabe zugrunde, ein Installationsgerät der Gebäudeinstallationstechnik bereitzustellen, das es ohne die Einbindung eines Endgerätes wie ein Smartphone oder ein Tablet ermöglicht, einen umweltbewussten und preisbewussten Energieverbrauch zu fördern und dabei besonders komfortabel ablesbar ist.

Gelöst wird diese Aufgabe durch einen Raumtemperaturregler der Gebäudeinstallationstechnik, wobei der Raumtemperaturregler an ein Smart-Meter oder ein Energiemanagementsystem zur Bereitstellung von Informationen bezüglich regenerativ erzeugter Energie angeschlossen ist und dass der Raumtemperaturregler eine visuelle Anzeige umfasst, die die Informationen bezüglich regenerativ erzeugter Energie oder Informationen bezüglich einer aktuellen Stromquelle, beispielsweise regenerativ erzeugter Energie oder Netzstrombezug inklusive des Netzstrompreises, visuell wiedergibt.

Durch den erfindungsgemäßen Raumtemperaturregler wird somit erreicht, dass Personen im Gebäude unmittelbar, intuitiv und einfach bezüglich der regenerativ erzeugten Energie informiert werden, ohne auf externe Geräte wie Apps oder Displays angewiesen zu sein.

Ein weiterer Vorteil des erfindungsgemäßen Raumtemperaturreglers besteht darin, dass dieser regelmäßig nicht in Bodennähe (wie Steckdosen) sondern in Augenhöhe, angeordnet ist.

Darüber hinaus ist ein Raumtemperaturregler an eine Heizungsanlage angeschlossen, so dass bei Vorliegen einer gewissen Menge an regenerativ erzeugter Energie, die (elektrische) Heizung besonders einfach angesteuert werden kann.

Hierzu weist der erfindungsgemäße Raumtemperaturregler der Gebäudeinstallationstechnik Anschlussmittel an eine Energieversorgung sowie Anschlussmittel an eine Heizungsanlage eines Gebäudes auf, wobei der Raumtemperaturregler ein Bedienelement umfasst. Der Raumtemperaturregler ist an ein Smart-Meter oder ein Energiemanagementsystem zur Bereitstellung von Informationen bezüglich regenerativ erzeugter Energie oder Informationen bezüglich einer aktuellen Stromquelle, beispielsweise regenerativ erzeugter Energie oder Netzstrombezug inklusive des Netzstrompreises, angeschlossen (beispielsweise drahtlos oder drahtgebunden). Der Raumtemperaturregler umfasst eine visuelle Anzeige, die die Informationen bezüglich regenerativ erzeugter Energie visuell wiedergibt. Durch einen solchen erfindungsgemäßen Raumtemperaturregler wird es auf geschickte und komfortable Weise ermöglicht, nicht nur einen Überschuss an regenerativ erzeugter Energie zu erfassen, sondern auch die Erfassung des aktuellen Energiepreises, insbesondere des Strompreises des externen Netzstroms, möglich zu machen. Damit kann ein Anwender einen für ihn günstigen Zeitpunkt des Energieverbrauchs - sei es durch elektrische Verbraucher oder der (elektrischen) Heizungsanlage - abpassen.

Ein Smart Meter ist ein intelligentes Messsystem, das den Stromverbrauch zeitaufgelöst erfasst und digital überträgt. Es bildet die technische Grundlage für dynamische Stromtarife, bei denen sich der Preis stündlich nach Marktbedingungen richtet. Verbraucher können ihren Energieeinsatz damit flexibel auf günstige Tarifzeiten abstimmen.

In Verbindung mit einer Photovoltaikanlage und ggf. einem Stromspeicher ermöglicht das Smart Meter eine gezielte Nutzung des selbst erzeugten Stroms und eine optimierte Steuerung elektrischer Verbraucher. Dadurch wird der Eigenverbrauchsanteil gesteigert und gleichzeitig das öffentliche Stromnetz entlastet.

Zudem liefern Smart Meter die nötige Datengrundlage für ein netzdienliches Lastmanagement: Verbrauch kann automatisch verschoben werden, um Lastspitzen zu vermeiden und die Integration erneuerbarer Energien zu unterstützen. Damit sind Smart Meter ein zentraler Baustein für ein flexibles, stabiles und zukunftsfähiges Energiesystem.

Gemäß einer außerordentlich bevorzugten Weiterbildung des erfindungsgemäßen Raumtemperaturreglers umfasst die visuelle Anzeige eine numerische Anzeige und/oder eine farbkodierte Anzeige. Während die numerische Anzeige eine präzise Auskunft über die Leistungsaufnahme ermöglicht, ist eine Darstellung via farbkodierte Anzeige besonders intuitiv. Besonders bevorzugt, umfasst die Erfindung sowohl eine numerische als auch eine farbkodierte Anzeige, um beide Vorteile gleichzeitig zu verwirklichen. Dieses kann beispielsweise erreicht werden, indem ein geringer Überschuss an regenerativ erzeugter Energie von beispielsweise 500W numerisch in orange via Display angezeigt wird, während ein Überschuss an regenerativ erzeugter Energie von beispielsweise 1500W numerisch in grün via Display angezeigt wird. Dabei kann die Anzeige zusätzlich durch Blinken hinterlegt sein, insbesondere dann, wenn eine Schwelle des Überschusses an regenerativ erzeugter Energie unterschritten wird. So kann der Nutzer vor einer etwaigen Überlastung der Steckdose beziehungsweise auf etwaige Sicherheitsrisiken präventiv aufmerksam gemacht werden.

In einer Weiterbildung des erfindungsgemäßen Raumtemperaturreglers weist die visuelle Anzeige eine, einen Balken aufweisende, Balkenanzeige auf, wobei der Balken Teilungseinheiten aufweist, die kontinuierlich oder diskretisiert ausgeführt sind. Dabei führt die visuelle Anzeige bevorzugt eine Kreisbahn nach. Dieses erlaubt vorteilhafterweise eine längere Anzeige für die Balkenanzeige, die mit einer Erhöhung des durch den Betrachter wahrnehmbaren Auflösungsvermögens einhergeht.

In einer Weiterbildung des erfindungsgemäßen Raumtemperaturreglers ist dieser in einer Höhe von 0,9 m bis 1,4 m über dem Fußboden installiert, so dass die Ablesbarkeit und auch Bedienbarkeit, beispielsweise im Falle des Vorliegens eines Überschusses an regenerativ erzeugter Energie und darauffolgender Anhebung der gewünschten Raumtemperatur, besonders komfortabel ist.

In einer Weiterbildung des erfindungsgemäßen Raumtemperaturreglers erfolgt durch ein Smart-Meter oder ein Energiemanagementsystem eine automatische Umstellung von Netzstrom auf Solarstrom und umgekehrt abhängig von vorher definierten Schwellwerten, wobei der Raumtemperaturregler selbst die Eingabe von Schwellwerten/Energiepreisen ermöglicht oder die Eingabe via Endgerät, das mit dem Raumtemperaturregler gekoppelt ist, ermöglicht wird, so dass eine intuitive Interaktion mit dem Raumtemperaturregler anstelle einer komplizierten Interaktion mit dem Smart-Meter oder ein Energiemanagementsystem für den Anwender entbehrlich wird.

Die Erfindung ist zudem auf eine Anordnung umfassend eine schaltbare Steckdose und einen erfindungsgemäßen Raumtemperaturregler gerichtet, wobei die Steckdose durch den Raumtemperaturregler in Abhängigkeit von der Information bezüglich regenerativ erzeugter Energie und/oder des Energiepreises geschaltet wird. Damit wird der Nutzen des erfindungsgemäßen Raumtemperaturreglers auf an elektrische Steckdosen anschließbare Verbraucher erweitert.

Nachfolgend ist die Erfindung unter Bezugnahme auf die beigefügten Figuren anhand diverser Ausführungsbeispiele beschrieben. Es zeigen:
- **Fig. 1:**: eine schematische Darstellung eines erfindungsgemäßen Raumtemperaturreglers in einer Frontansicht, und
- **Fig. 2:**: eine schematische Darstellung eines weiteren erfindungsgemäßen Raumtemperaturreglers in einer Frontansicht.

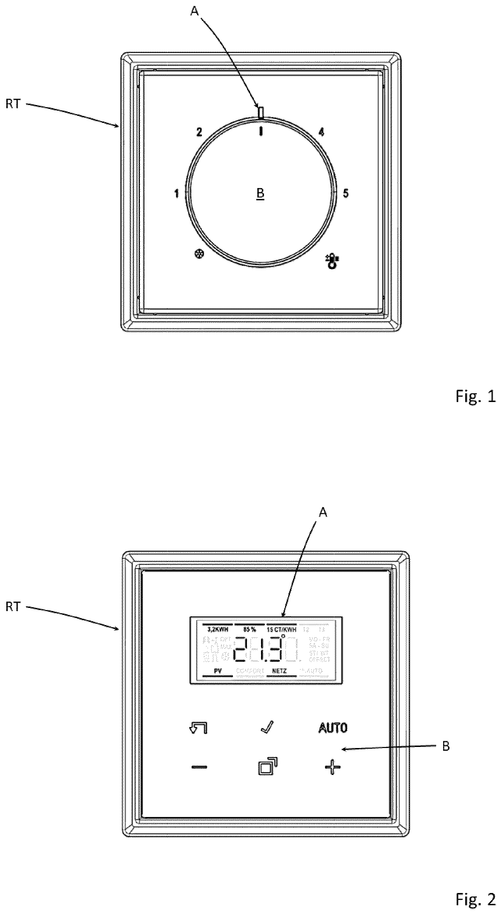

Figur 1 zeigt schematische Darstellung eines erfindungsgemäßen Raumtemperaturreglers RT in einer Frontansicht. Der erfindungsgemäße Raumtemperaturregler RT der Gebäudeinstallationstechnik weist Anschlussmittel an eine Energieversorgung sowie Anschlussmittel an eine Heizungsanlage eines Gebäudes auf (der Einfachheit halber nicht dargestellt), wobei der Raumtemperaturregler RT ein Bedienelement B umfasst. Der Raumtemperaturregler RT ist an ein Smart-Meter oder ein Energiemanagementsystem zur Bereitstellung von Informationen bezüglich regenerativ erzeugter Energie oder Informationen bezüglich einer aktuellen Stromquelle, beispielsweise regenerativ erzeugter Energie oder Netzstrombezug inklusive des Netzstrompreises angeschlossen (beispielsweise drahtlos oder drahtgebunden). Der Raumtemperaturregler RT umfasst eine visuelle Anzeige A, die die Informationen bezüglich regenerativ erzeugter Energie visuell wiedergibt. Dieses ist vorliegend durch eine farbkodierte Anzeige gegeben. Dieses kann beispielsweise erreicht werden, indem ein geringer Überschuss an regenerativ erzeugter Energie von beispielsweise 500W in orange via LED-Anzeige angezeigt wird, während ein Überschuss an regenerativ erzeugter Energie von beispielsweise 1500W numerisch in grün via LED-Anzeige angezeigt wird.

Figur 2 zeigt schematische Darstellung eines weiteren erfindungsgemäßen Raumtemperaturreglers RT in einer Frontansicht. Dabei umfasst die visuelle Anzeige A eine numerische Anzeige. Diese gibt Informationen bezüglich des Energiepreises des externen Netzstroms (vorliegend 15 Cent pro kWh) wieder, die durch ein Smart-Meter oder ein Energiemanagementsystem bereitgestellt werden.

### Bezugszeichenliste

- A: Anzeige
- B: Bedienelement
- RT: Raumtemperaturregler

## Patentansprüche

1. Raumtemperaturregler (RT) der Gebäudeinstallationstechnik umfassend Anschlussmittel an eine Energieversorgung sowie Anschlussmittel an eine Heizungsanlage eines Gebäudes, wobei der Raumtemperaturregler (RT) ein Bedienelement (B) umfasst, **dadurch gekennzeichnet, dass** der Raumtemperaturregler (RT) an ein Smart-Meter oder ein Energiemanagementsystem zur Bereitstellung von Informationen bezüglich regenerativ erzeugter Energie angeschlossen ist und dass der Raumtemperaturregler (RT) eine visuelle Anzeige (A) umfasst, die die Informationen bezüglich regenerativ erzeugter Energie oder Informationen bezüglich einer aktuellen Stromquelle, beispielsweise regenerativ erzeugter Energie oder Netzstrombezug inklusive des Netzstrompreises, visuell wiedergibt.

2. Raumtemperaturregler (RT) nach Anspruch 1, **dadurch gekennzeichnet, dass** die visuelle Anzeige (A) eine numerische Anzeige umfasst.

3. Raumtemperaturregler (RT) nach Anspruch 1 oder 2, **dadurch gekennzeichnet, dass** die visuelle Anzeige (A) eine farbkodierte Anzeige umfasst.

4. Raumtemperaturregler (RT) nach einem der Ansprüche 1 bis 3, **dadurch gekennzeichnet, dass** die visuelle Anzeige (A) eine, einen Balken aufweisende, Balkenanzeige umfasst, wobei der Balken Teilungseinheiten aufweist, die kontinuierlich oder diskretisiert ausgeführt sind.

5. Raumtemperaturregler (RT) nach Anspruch 4, **dadurch gekennzeichnet, dass** die visuelle Anzeige (A) eine Kreisbahn nachführt, wobei im Inneren der Kreisbahn ein kreisförmiges Betätigungselement (B), beispielsweise ein Drehregler, angeordnet ist.

6. Raumtemperaturregler (RT) nach einem der Ansprüche 1 bis 5, **dadurch gekennzeichnet, dass** der Raumtemperaturregler (RT) in einer Höhe von 0,9 m bis 1,4 m über dem Fußboden installiert ist.

7. Anordnung umfassend eine schaltbare Steckdose und einen Raumtemperaturregler (RT) nach einem der Ansprüche 1 bis 6, wobei die Steckdose durch den Raumtemperaturregler (RT) in Abhängigkeit von der Information bezüglich regenerativ erzeugter Energie und/oder des Energiepreises geschaltet wird.
